# EUROPEAN PATENT SPECIFICATION

(11) **EP 4 159 631 B1**
(45) Date of publication and mention of the grant of the patent: **24.04.2024**
(21) Application number: 22196510.6
(22) Date of filing: 20.09.2022
(51) Int. Cl.: B65D 5/74, B65D 47/10, B29C 45/00, B29C 37/00, B29C 45/14, B29L 31/56, B65D 51/22

(54) **OPENING DEVICE FOR A PACKAGE, MOLD FOR MOLDING AN OPENING DEVICE FOR A PACKAGE AND PACKAGE HAVING AN OPENING DEVICE**
ÖFFNUNGSVORRICHTUNG FÜR EINE VERPACKUNG, FORM ZUM FORMEN EINER ÖFFNUNGSVORRICHTUNG FÜR EINE VERPACKUNG UND VERPACKUNG MIT EINER ÖFFNUNGSVORRICHTUNG
DISPOSITIF D'OUVERTURE POUR UN EMBALLAGE, MOULE POUR MOULER UN DISPOSITIF D'OUVERTURE POUR UN EMBALLAGE ET EMBALLAGE DOTÉ D'UN DISPOSITIF D'OUVERTURE

(30) Priority: 30.09.2021 EP 21200032
(43) Date of publication of application: 05.04.2023
(73) Proprietor: Tetra Laval Holdings & Finance S.A., 1009 Pully (CH)
(72) Inventor: ZANON, Paolo, 41122 Modena (IT); VIETRI, Anna Rosa, 41122 Modena (IT); DE PAOLA, Rocco, 41122 Modena (IT); MARTINI, Pietro, 43122 Parma (IT)
(74) Representative: Tetra Pak - Patent Attorneys SE

(56) References cited:
- EP-A1- 2 368 807
- EP-A1- 3 456 521
- EP-A1- 3 715 276
- EP-A1- 3 892 564
- JP-A- 2005 289 389

## Description

### TECHNICAL FIELD

The present invention relates to an opening device for a package, in particular a package having a main body, filled with a pourable product, even more particular filled with a pourable food product.

Furthermore, the present invention also relates to a mold for molding an opening device for a package, in particular a package having a main body, filled with a pourable product, even more particular filled with a pourable food product.

Advantageously, the present invention also relates to a package, in particular a package having a main body, filled with a pourable product, even more particular filled with a pourable food product, and comprising an opening device.

### BACKGROUND ART

As is known, many liquid or pourable food products, such as fruit juice, milk, milk-based drinks, drinking yoghurt, wine, tomato sauce, salt, sugar etc., are sold in packages, in particular sealed packages, made of a sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. layers of polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Thus, such a type of package comprises a main body formed from a multilayer packaging material and has a designated pour opening, which allows the outpouring of the pourable product from the package. Additionally, the package can comprise an opening device arranged about the designated pour opening. The opening device is designed to seal the package prior to a first opening of the opening device and to allow for a controlled outpouring.

A typical opening device comprises a base frame coupling the opening device about the designated pour opening, a collar extending from the base frame and delimiting a flow channel and a closing element arranged within the flow channel and configured to close the designated pour opening.

When the package is delivered to the final customer, the closing element is rupturably connected to an inner wall of the collar so as to close and seal the designated pour opening. Afterwards it is possible to re-arrange the closing element into the flow channel so as to newly close the designated pour opening and to avoid an unwanted spillage of the pourable product.

Even though such closing elements typically work well, the applicant has found that it may happen that the closing element does not correctly cover the designed pour opening once the coupling membrane has been ruptured so that the pourable product may leak into the flow channel.

Thus, the need is felt in the sector to improve the known opening device in order to guarantee that the closing element once being newly arranged within the flow channel may correctly cover the designated pour opening.

It is furthermore known that the main body may be obtained from a packaging blank of a multilayer packaging material, the packaging blank having the designated pour opening and being covered by a sealing membrane of an oxygen-barrier material.

One technological solution for providing the final package with the opening device is based on molding the opening device onto the packaging blank and to form the packaging blank after the molding of the opening device so as to obtain the final package. Examples of opening devices directly molded onto the packaging material before formation of the package are disclosed in patent documents EP3892564A1, EP3456521A1. Conversely, patent document EP2368807A1 discloses an opening device molded separately and thereafter applied to an already formed package.

Thus, a further desire is felt in the sector to provide an opening device that can be easily molded to the packaging blank, in particular allowing for a facilitated extraction of the opening device from the respective mold.

### DISCLOSURE OF INVENTION

It is therefore an object of the present invention to provide in a straightforward and low-cost manner an improved opening device for a package, in particular a package having a main body formed from a multilayer packaging material, filled with a pourable product, even more particular filled with a pourable food product.

In particular, it is an object of the present invention to provide in a straightforward and low-cost manner an improved opening device for a package, in particular a package having a main body formed from a multilayer packaging material, filled with a pourable product, even more particular filled with a pourable food product, which allows a reclosing and/or which can be easily molded onto the package and/or a precursor of the package.

It is another object of the present invention to provide in a straightforward and low-cost manner a mold for molding an opening device.

It is a further object of the present invention to provide in a straightforward and low-cost manner a package, in particular a package having a main body formed from a multilayer packaging material, filled with a pourable product, in particular filled with a pourable food product, having an opening device, in particular an opening device which allows a reclosing and/or which can be easily molded on the package and/or a precursor of the package.

According to the present invention, there is provided an opening device according to the independent claim.

Further advantageous embodiments of the opening device are specified in the claims directly or indirectly depending on claim 1.

According to the present invention, there is also provided a mold according to claim 12.

According to the present invention, there is also provided a package according to claim 13, claim 14 or claim 15.

### BRIEF DESCRIPTION OF THE DRAWINGS

A non-limiting embodiment of the present invention will be described by way of example with reference to the accompanying drawings, in which:
Figure 1 is a schematic perspective view of a portion of a package having an opening device according to the present invention, with parts removed for clarity;
Figure 2 is a perspective view of the package of Figure 1 and focusing on a detail of the opening device of Figure 1, with parts removed for clarity;
Figure 3 is section view of the detail of the opening device of Figure 2 with a portion being in a first configuration, with parts removed for clarity;
Figure 4 is sectioned view of the detail of the opening device of Figure 2 with the portion being in a second configuration, with parts removed for clarity;
Figure 5a is an enlarged section view of the detail of Figure 3 with the portion being in the first configuration, with parts removed for clarity; and
Figure 5b is the enlarged section view of Figure 5a emphasizing a cross-section profile of a part of the detail of Figure 3, with parts removed for clarity.

### BEST MODES FOR CARRYING OUT THE INVENTION

Number 1 indicates as a whole a package (only partially shown to the extent necessary for the comprehension of the present invention) comprising:
- a main body 2, in particular a main body 2 formed from a multilayer packaging material, being filled and/or being fillable with a pourable product, in particular a pourable food product, and in particular having a designated pour opening (not shown and known as such) configured to allow for an outflow of the pourable product from main body 2; and
- an opening device 3, in particular formed from a polymer material, coupled to main body 2 about the designated pour opening and configured to seal the designated pour opening and to be controllable so as to open the designated pour opening and to allow for the outpouring of the pourable product.

The pourable product may be milk, tomato sauce, milk-based drinks, drinking yoghurt, water, sugar, salt, juices, emulsions, and the like.

According to some preferred non-limiting embodiments, the packaging material may comprise at least a layer of fibrous material, such as e.g. a paper or cardboard layer, and at least two layers of heat-seal plastic material, e.g. polyethylene layers, interposing the layer of fibrous material in between one another. One of these two layers of heat-seal plastic material may define the inner face of main body 2 contacting the pourable product.

Preferably, the packaging material may also comprise a layer of gas- and light-barrier material, e.g. aluminum foil or ethylene vinyl alcohol (EVOH) film, in particular being arranged between one of the layers of heat-seal plastic material and the layer of fibrous material. Preferentially but not necessarily, the packaging material may also comprise a further layer of heat-seal plastic material being interposed between the layer of gas- and light-barrier material and the layer of fibrous material.

Preferentially, each package 1, in particular the respective main body 2, may be obtained from a respective blank of the multilayer packaging material. In particular, the blank may define a precursor of the respective package 1, in particular the respective main body 2.

In more detail, the respective blank may comprise the respective designated pour opening, which in particular may be covered by a separation membrane. The separation membrane may be formed from a gas-barrier material, in particular the separation membrane may be defined by a portion of the layer of the gas- and light-barrier material.

According to some preferred non-limiting embodiments, the multilayer packaging material may be provided in the form of a web, thereby the packaging blanks may be successively arranged with respect to one another. During the formation of packages 1, the web is formed into a tube, longitudinally sealed, filled with the pourable product and transversally sealed and cut in correspondence with the extensions of the packaging blanks.

According to a preferred non-limiting embodiment, each opening device 3 may be applied, in particular molded, to the respective main body 2 or onto the respective packaging blank. Preferentially, each opening device 3 is molded onto the respective packaging blank and about the designated pour opening. In particular and as will be explained further below, a first portion of opening device 3 may be molded onto the respective packaging blank and a second portion may be applied onto the first portion after molding of the first portion.

In particular, opening device 3 is molded by means of a respective mold.

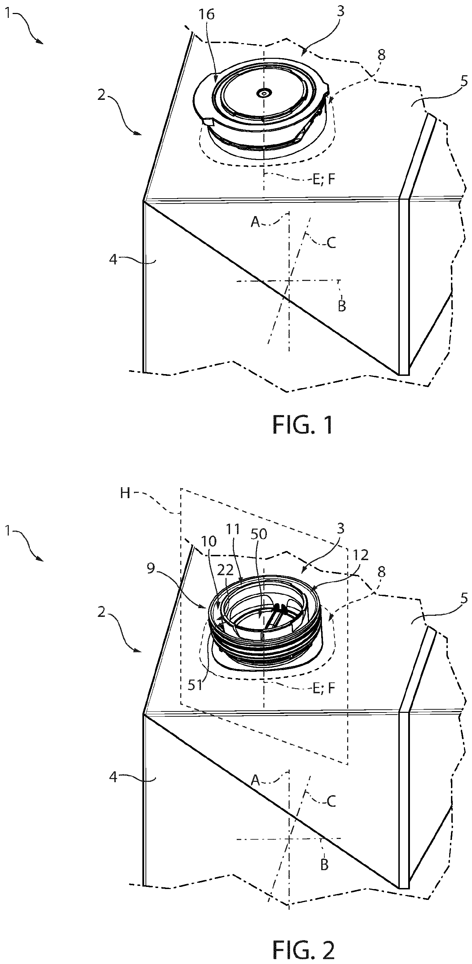

With particular reference to Figures 1 and 2, main body 2 may extend along a longitudinal axis A, a first transversal axis B perpendicular to longitudinal axis A and a second transversal axis C perpendicular to first transversal axis B and longitudinal axis A. In particular, the extension of package 2 along longitudinal axis A may be larger than the extension of package 2 along first transversal axis B and second transversal axis C.

Preferentially, main body 2 may be parallelepiped-shaped.

According to some preferred non-limiting embodiments, main body 2 may comprise a first wall (not shown and known as such), in particular being transversal, even more particular perpendicular, to longitudinal axis A, from which main body 2 may extend along longitudinal axis A. Preferably, the first wall may define a support surface of package 1, in particular main body 2, which may be designed to be put in contact with a support, such as e.g. a shelf, when, in use, being e.g. exposed within a sales point or when being stored. In particular, when being arranged on the support the first wall may define a bottom wall.

Preferably, main body 2 may also comprise a side wall 4 being (fixedly) connected to the first wall and extending, in particular substantially parallel, along longitudinal axis A, from the first wall.

Preferentially, main body 2 may also comprise a second wall 5 opposite to the first wall and being (fixedly) connected to side wall 4. In particular, side wall 4 may be interposed between the first wall and second wall 5.

In particular, when package 1 is arranged on a support, second wall 5 may define a top wall.

According to the shown non-limiting embodiment, the first wall and second wall 5 may be parallel to one another.

According to non-limiting alternative embodiments not shown, the first wall and second wall 5 may be inclined with respect to one another. In particular, second wall 5 may define a slanted top or may define a portion of a gable-top.

According to some non-limiting embodiments, second wall 5 may carry and/or comprise the designated pour opening.

According to some preferred non-limiting embodiments, package 1, in particular main body 2, may comprise an inner space configured to contain and/or containing the pourable product. In particular, the first wall, side wall 4 and second wall 5 may delimit the inner space.

With particular reference to Figures 2 to 5b, opening device 3 comprises:
- a base frame 8 configured to couple and/or coupling opening device 3 onto main body 2, in particular to second wall 5, and about the designated pour opening;
- a collar 9 extending from base frame 8 and delimiting a flow channel 10; and
- a closing element 11 arranged and/or being arrangeable within flow channel 10 and configured to close and/or cover, and, in particular at least prior to a first movement of closing element 11 away from collar 9 and/or flow channel 10, to seal, the designated pour opening.

Preferentially, base frame 8, collar 9 and closing element 11 may be integrally formed, in particular in a single piece.

More specifically, flow channel 10 extends between a pouring outlet 12 (of collar 9) configured to allow for the outpouring of the pourable product and an inlet 13 (of collar 9) configured to allow for the introduction of the pourable product into flow channel 10, in particular from the inner space of package 1, in particular main body 2, into flow channel 10.

In more detail, collar 9 is integrally connected to base frame 8.

In further detail, collar 9 may extend along a central axis E and pouring outlet 12 and inlet 13 may be arranged at respective axial ends of collar 9.

In even more detail, collar 9 may comprise a first delimiting rim 14 delimiting pouring outlet 12 and a second delimiting rim delimiting inlet 13, each one being arranged at the respective axial end of collar 9.

Preferentially, closing element 11 may be coaxially positioned with respect to collar 9. In other words, a central axis F of closing element 11 may be coaxial to central axis E.

Additionally, opening device 3 may also comprise a closure 16 coupled and/or couplable to collar 9 and configured to selectively open and close pouring outlet 12, in particular for respectively allowing and impeding an outpouring of the pourable product.

Preferentially, closing element 11 and closure 16 may be connected, in particular fixed, to one another such that any movement of closure 16 results in a concurrent movement of closing element 11. In particular, closing element 11 and closure 16 may be connected to one another by means of fusing and/or welding and/or bonding and/or molding.

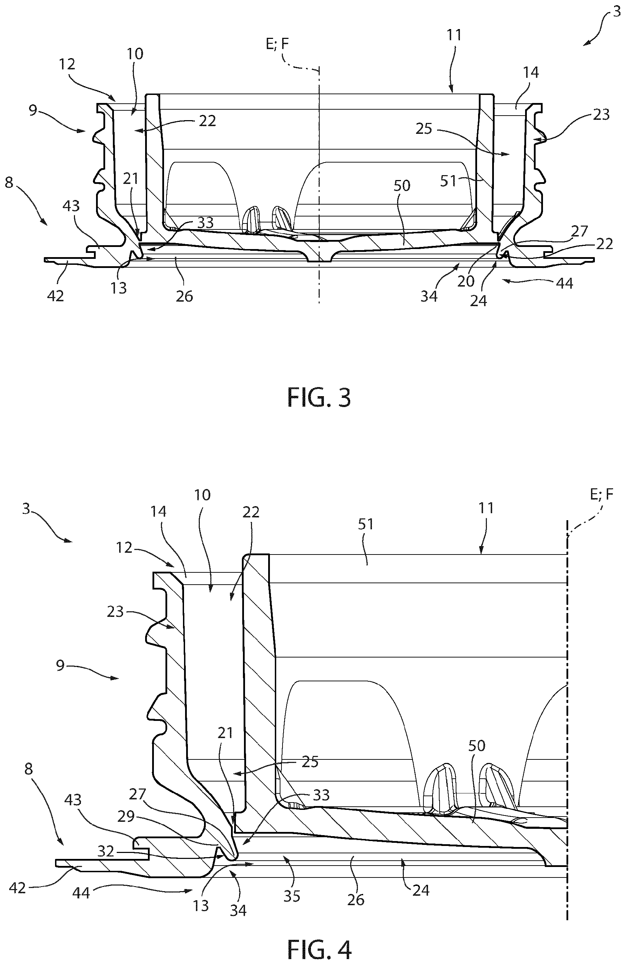

With particular reference to Figures 3 to 5b, closing element 11 comprises a coupling membrane 20 being detachably and/or rupturably fixed to collar 9 along an (annular) initial contact portion 21 (of an inner wall 22 of collar 9.

Furthermore, closing element 11 is configured to (rupturably) detach from initial contact portion 21 so as to free and/or open the designated pour opening for allowing the outpouring of the pourable product.

Preferentially, prior to the first-time detachment of closing element 11 from initial contact portion 21, closing element 11 is configured to seal the designated pour opening and the inner space. Afterwards, it is possible to place closing element 11 such that closing element 11 may close the designated pour opening, but may not seal the designated pour opening and the inner space anymore.

Moreover, when closing element 11 detaches, in use, for the first time from initial contact portion 21, coupling membrane 20 irreversibly ruptures from initial contact portion 21.

In more detail, closing element 11 may be controllable between an active position in which closing element 11 is configured to cover and/or close the designated pour opening and an inactive position in which closing element 11 frees and/or opens the designated pour opening.

In other words, closing element 11 may be configured to interrupt and/or at least obstacle a fluidic connection between pouring outlet 12 and inlet 13 when being in the active position and to allow for a fluidic connection between pouring outlet 12 and inlet 13 when being in the inactive position.

Preferentially, closing element 11 is arranged within flow channel 10 and/or is interposed between pouring outlet 12 and base frame 8 when being in the active position.

Furthermore (see Figure 3), initially closing element 11 is controlled in the active position and prior to the first-time movement from the active position to the inactive position, closing element 11 is rupturably connected to initial contact portion 21 so as to also seal the designated pour opening.

Moreover, after the first-time movement of closing element 11 from the active position to the inactive position, closing element 11 can be newly placed in the active position. Then, closing element 11 can newly contact collar 9, in particular inner wall 22, so as to close and/or cover the designated pour opening and/or to interrupt and/or obstacle the fluidic connection between pouring outlet 12 and inlet 13-.

With particular reference to Figures 3 to 5b, initial contact portion 21 is interposed between base frame 8 and pouring outlet 12.

Furthermore, in particular in order to ensure that closing element 11 can interact with collar 9, in particular inner wall 22, after the first-time movement of closing element 11 from the active position to the inactive position, collar 9 comprises:
- a main portion 23 comprising pouring outlet 12 and extending from initial contact portion 21 to pouring outlet 12; and
- a sealing ring 24 comprising inlet 13 and extending from initial contact portion 21 to inlet 13.

In particular, sealing ring 24 is designed such to ensure that closing element 11 closes the designated pour opening and/or interrupts and/or at least obstacles the fluidic connection between inlet 13 and pouring outlet 12 when being in the active position and after the first-time movement of closing element 11 from the active position to the inactive position. In particular, even if the exact position of at least a portion of closing element 11 is below initial contact portion 21, it is ensured that closing element 11 contacts inner wall 22 of collar 9.

Advantageously, sealing ring 24 is deflectable with respect to main portion 23 and base frame 8.

In this way, it may be possible to further ensure the interaction between closing element 11 and inner wall 22 and the closing of the designated pour opening. In addition, extraction of sealing ring 24 from a mold may be facilitated.

In particular, sealing ring 24 may be deflectably connected to main portion 23 and base frame 8.

In more detail, main portion 23 may comprise a first surface portion 25 of inner wall 22 and sealing ring 24 may comprise a second surface portion of inner wall 22.

Preferentially, sealing ring 24 may comprise a (curved) tip portion 26 delimiting inlet 13 and/or defining the second delimiting rim.

Moreover, inlet 13 may be arranged at an axial end of sealing ring 24 opposite to an axial end of sealing ring 24 that is arranged at initial contact portion 21.

In further detail, sealing ring 24 is connected to and protrudes from main portion 23 in such a manner so as to extend towards and/or into the inner space of package 1. In other words, sealing ring 24 may be designed to protrude towards and/or into the inner space.

Sealing ring 24 may delimit an auxiliary space having a frustoconical configuration. In particular, the auxiliary space may taper from initial contact portion 21 to inlet 13.

Preferentially, sealing ring 24 may have rotational symmetry with respect to central axis E.

According to some preferred non-limiting embodiments, sealing ring 24 may comprise a main body 27, in particular having tip portion 26.

Additionally, sealing ring 24 may also comprise:
- an annular coupling portion 28 connected to and/or partially delimiting initial contact portion 21, and in particular also connected to main body 27; and/or
- an annular coupling section 29 connecting sealing ring 24 to base frame 8; annular coupling section 29 may also be connected to main body 27.

In particular, annular coupling portion 28 may connect to main body 27 from a first side and annular coupling section 29 may connect to main body 27 from a second side, in particular opposite to the first side.

Preferentially, annular coupling portion 28 may extend from initial contact portion 21 towards inlet 13.

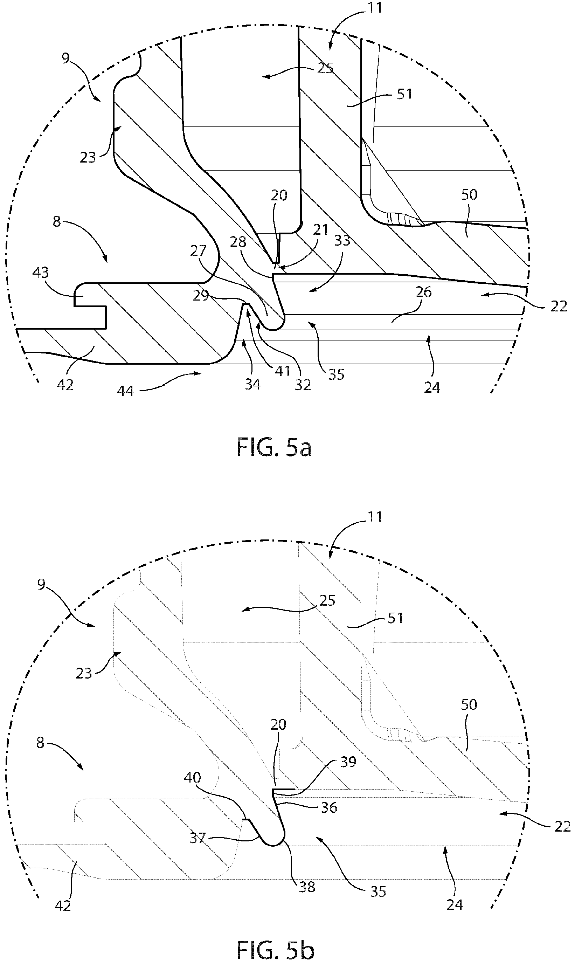

With particular reference to Figure 5a, sealing ring 24, in particular main body 27, may comprise an inner surface 33, an outer surface 32 radially displaced from and opposite to inner surface 33, in particular with respect to central axis F and/or central axis E, and a curved tip surface 35 connecting inner surface 33 and outer surface 32 with one another.

Preferentially, tip portion 26 may comprise tip surface 35.

Preferentially, inner surface 33 may at least partially define the second surface portion of inner wall 22.

In particular, inner surface 33 and first surface portion 25 may interpose initial contact portion 21 between one another.

Preferentially, inner surface 33 may be inclined with respect to first surface portion 25.

In more detail, outer surface 32 may face a surface 34 of base frame 8. In particular, surface 34 may be curved.

In further detail and with reference to Figure 5b, a cross-section profile of sealing ring 24 with respect to a cross-section plane H containing central axis E of collar 9 may comprise a first linear line 36 and a second linear line 37 radially displaced from first linear line 36 and being arranged radially outside with respect to first linear line 36, in particular with respect to central axis E. In particular, first linear line 36 and second linear line 37 may result from the section of cross-section plane H with respectively inner surface 33 and outer surface 32.

In more detail, second linear line 37 may have an extension corresponding to at least 50% of an extension of first linear line 36. Preferentially, the extension of first linear line 36 is larger than the extension of second linear line 37.

Moreover, the cross-section profile may also comprise a curved line 38 connecting first linear line 36 and second linear line 37 with one another.

According to some preferred non-limiting embodiments, the cross-section profile may also comprise a third linear line 39 connected to first linear line 36 and to initial

contact portion 21. In particular, third linear line 39 may result from the section of cross-section plane H with annular coupling portion 28.

According to some preferred non-limiting embodiments, the cross-section profile may also comprise a fourth linear line 40 connected to second linear line 37 and connected to and/or extending towards base frame 8. In particular, fourth linear line 40 may result from the section of cross-section plane H with annular coupling section 29.

In particular, fourth linear line 40 may transversally extend from second linear line 37.

With particular reference to Figure 5a, annular coupling portion 28, in particular a respective outer surface of annular coupling portion 28, and coupling membrane 20, in particular prior to rupturing from initial contact portion 21, may define an angle ranging between 85° to 95°, in particular being substantially 90°.

Preferentially, annular coupling portion 28 and coupling membrane 20 may be substantially perpendicular to one another.

Such a feature may contribute to the deflectable nature of sealing ring 24 and/or allow a facilitated removal of sealing ring 24 from a respective mold.

Preferentially, the outer surface of annular coupling portion 28 may have a flat shape.

In particular, third linear line 39 and coupling membrane 20, in particular prior to rupturing from initial contact portion 21, may define an angle ranging between 85° to 95°, in particular being substantially 90°. Preferentially, third linear line 39 may be substantially perpendicular to coupling membrane 20, in particular prior to rupturing of coupling membrane 20 from initial contact portion 21.

According to some preferred non-limiting embodiments, annular coupling section 29 may comprise an annular flat surface 41. In particular, annular flat surface 41 may extend from outer surface 32 and to base frame 8 and/or annular flat surface 41 may be transversal to outer surface 32.

With particular reference to Figures 3 to 5b, base frame 8 may comprise a first flange 42 designed to be arranged within the inner space of package 1, in particular main body 2. Additionally, base frame 8 may comprise a second flange 43 axial displaced and parallel to first flange 42.

Preferentially, first flange 42 and second flange 43 may be configured to interpose a portion of main body 2, in particular of the packaging material, between one another.

Moreover, first flange 42 may delimit an inlet aperture 44 of base frame 8 for the pourable product.

Preferentially, inlet 13 may be axially displaced from inlet aperture 44. In particular, inlet 13 may be interposed between closing element 11 and/or initial connecting portion 21 and inlet aperture 44.

In further detail and with particular reference to Figures 2 to 5b, closing element 11 may comprise:
- a central main wall 50, in particular a circular central main wall 50, peripherally connected to coupling membrane 20; and
- a coupling structure 51 extending from central main wall 50 and configured to connect and/or connecting closing element 11 to closure 16.

More specifically, coupling structure 51 may be connected, in particular welded and/or bonded and/or fused, to closure 16, in particular an inner surface of closure 16.

According to some preferred non-limiting embodiments, closure 16 may be movable between:
- a closing configuration, in which closure 16 covers pouring outlet 12, in particular for impeding an outflow of the pourable product out of pouring outlet 12; and
- an opening configuration in which closure 16 may be detached from pouring outlet 12, in particular for allowing an outflow of the pourable product through pouring outlet 12.

Preferentially, closure 16 may be reversibly moved between the closing configuration and the opening configuration.

According to some preferred non-limiting embodiments, closing element 11 may be connected, in particular fused and/or welded and/or bonded, to closure 16, in particular by means of coupling structure 51, such that movement of closure 16 between the closing configuration and the opening configuration may result in movement of closing element 11 between respectively the active position and the inactive position.

It should be noted that package 1 may be immediately after its formation be arranged in an initial configuration in which closure 16 and closing element 11 may be respectively in the closing configuration and in the active position. Package 1 may be distributed and/or sold to a user while being in the initial configuration.

According to some non-limiting embodiments, base frame 8, collar 9 and closing element 11 may be integrally formed, in particular in a single piece. In particular, base frame 8, collar 9 and closing element 11 may be formed during a molding process, in particular during molding of opening device 3 onto the respective packaging blank.

Furthermore, closure 16 may be coupled to collar 9 after formation of base frame 8, collar 9 and closing element 11.

In other words, base frame 8, collar 9 and closing element 11 may define the first portion of opening device 3 and closure 16 may define the second portion of opening device 3. Thus, closure 16 is applied to collar 9 after molding of base frame 8, collar 9 and closing element 11, in particular about the designated pour opening.

In use, a user receives package 1 with closure 16 and closing element 11 being respectively in the closing configuration and the active position so as to respectively cover pouring outlet 12 and the designated pour opening.

Prior to the first control of closure 16 from the closing configuration to the opening configuration and of closing element 11 from the active position to the inactive position, closing element 11, in particular through annular coupling membrane 20, is fixed to initial contact portion 21.

The user, in order to access the pourable product, needs to control closure 16 from the closing configuration to the opening configuration leading to a movement of closing element 11 from the active position to the inactive position and a rupturing of closing element 11, in particular of coupling membrane 20, from initial contact portion 21. This then allows the pourable product to flow from the inner space through flow channel 10 and out of flow channel 10 through pouring outlet 12.

Each time closing element 11 is arranged again in the active position (by moving closure 16 in the closing configuration) closing configuration covers the designated pour opening. Thereby, the presence of sealing ring 24 ensures that closing element 11 engages inner wall 22 so as to close the designated pour opening and/or to interrupt or to obstacle a fluid connection between inlet 13 and pouring outlet 12.

The advantages of opening device 3 and/or of package 1 according to the present invention will be clear from the foregoing description.

In particular, by providing deflectable sealing ring 24 it is possible to improve the closing effectiveness after newly placing closing element 11 in the active position. Alternatively or additionally, the deflectable nature of sealing ring 24 allows removal of (the first portion of) opening device 3, in particular sealing ring 24 out of the mold needed to mold opening device 3.

Clearly, changes may be made to opening device 3 and/or package 1 as described herein without, however, departing from the scope of protection as defined in the accompanying claims.

## Claims

1. Opening device (3) for a package (1) having a designated pour opening and being filled with a pourable product;
the opening device (3) comprises:
- a base frame (8) configured to couple the opening device (3) about the designated pour opening;
- a collar (9) extending from the base frame (8) and delimiting a flow channel (10) for the pourable product; and
- a closing element (11) arranged and/or being arrangeable within the flow channel (10) and being configured to cover and/or close the designated pour opening;
wherein the collar (9) comprises an inlet (13) configured to allow for an inlet of the pourable product into the flow channel (10) and a pouring outlet (12) configured to allow for an outpouring of the pourable product from the flow channel (10);
wherein the collar (9) further comprises:
- a main portion (23) comprising the pouring outlet (12) and extending from an initial contact portion (21) of the collar (9) to the pouring outlet (12); and
- a sealing ring (24) comprising the inlet (13);
wherein the sealing ring (24) is deflectable with respect to the main portion (23) and the base frame (8),
**characterized in that** the closing element (11) comprises a coupling membrane (20) being detachably fixed to the initial contact portion (21) of the collar (9);
wherein the initial contact portion (21) is interposed between the base frame (8) and the pouring outlet (12);
wherein the sealing ring (24) extends from the initial contact portion (21) to the inlet (13).

2. Opening device according to claim 1, wherein the sealing ring (24) comprises a main body (27) having an inner surface (33), an outer surface (32) radially displaced from and opposite to the inner surface (33) and a curved tip surface (35) connecting the inner surface (33) and the outer surface (32) with one another.

3. Opening device according to claim 2, wherein the inner surface (33) and a first surface portion (25) of main portion (23) interpose the initial contact portion (21) between one another;
wherein the inner surface (33) is inclined with respect to the first surface portion (25).

4. Opening device according to any one of the preceding claims, wherein a cross-section profile of the sealing ring (24) with respect to a cross-section-plane (H) containing a central axis (E) of the collar (9) comprises a first linear line (36) and a second linear line (37) radially displaced from the first linear line (36) and being arranged radially outside with respect to the first linear line (36).

5. Opening device according to claim 4, wherein the cross-section profile comprises a curved line (38) connecting the first linear line (36) and the second linear line (37) with one another.

6. Opening device according to claim 4 or 5, wherein the second linear line (37) has an extension corresponding to at least 50% of the extension of the first linear line (36) .

7. Opening device according to any one of the preceding claims, wherein the sealing ring (24) comprises an annular coupling portion (28) connected to and/or partially delimiting the initial contact portion (21);
wherein the annular coupling portion (28) and the coupling membrane (20) define an angle ranging between 85° to 95°, in particular being substantially 90°.

8. Opening device according to any one of the preceding claims, wherein the sealing ring (24) comprises an annular coupling section (29) connecting the sealing ring (24) to the base frame (8);
wherein the annular coupling section (29) comprises an annular flat surface (41).

9. Opening device according to any one of the preceding claims, wherein the base frame (8) comprises a first flange (42) designed to be arranged within an inner space of the package (1) and delimiting an inlet aperture (44) of the base frame (8) for the pourable product;
wherein the sealing ring (24) delimits an inlet (13) allowing for the pourable product to flow into the flow channel (10);
wherein the inlet (13) is axially displaced from the inlet aperture (44).

10. Opening device according to claim 9, wherein the inlet is interposed between the closing element (11) and/or the initial contact portion (21) and the inlet aperture (44).

11. Opening device according to any one of the preceding claims, wherein the sealing ring (24) is designed to protrude towards and/or into an inner space of the package (1) .

12. Mold configured to allow for molding the opening device (3) according to any one of the preceding claims onto a main body (2) of a package (1) for a pourable product and/or onto a precursor of a package (1) for a pourable product.

13. Package (1) filled and/or fillable with a pourable product and comprising at least one opening device (3) according to any one of claims 1 to 11.

14. Package according to claim 13, wherein the package (1) comprises a main body (2) having a designated pour opening and being formed from a multilayer composite packaging material; wherein the opening device (3) is coupled onto the main body (2) and about the designated pour opening.

15. Package according to claim 13 or 14, wherein the opening device (3) is molded to a main body (2) of the package (1) and/or onto a precursor of the package (1).

## Patentansprüche

1. Öffnungsvorrichtung (3) für eine Verpackung (1), die eine festgelegte Gießöffnung aufweist und mit einem gießfähigen Produkt gefüllt ist;
wobei die Öffnungsvorrichtung (3) Folgendes umfasst:
- einen Grundrahmen (8), der dazu ausgelegt ist, die Öffnungsvorrichtung (3) um die festgelegte Gießöffnung zu koppeln;
- eine Manschette (9), die sich vom Grundrahmen (8) erstreckt und einen Strömungskanal (10) für das gießfähige Produkt begrenzt; und
- ein Verschlusselement (11), das innerhalb des Strömungskanals (10) angeordnet und/oder anordenbar ist und dazu ausgelegt ist, die festgelegte Gießöffnung abzudecken und/oder zu verschließen;
wobei die Manschette (9) einen Einlass (13), der dazu ausgelegt ist, den Einlass des gießfähigen Produkts in den Strömungskanal (10) zuzulassen, und einen Gießauslass (12), der dazu ausgelegt ist, das Ausgießen des gießfähigen Produkts aus dem Strömungskanal (10) zuzulassen, umfasst;
wobei die Manschette (9) ferner Folgendes umfasst:
- einen den Gießauslass (12) umfassenden und sich von einem Erstkontaktabschnitt (21) der Manschette (9) zum Gießauslass (12) erstreckenden Hauptabschnitt (23) und
- einen Dichtungsring (24), der den Einlass (13) umfasst;
wobei der Dichtungsring (24) in Bezug zum Hauptabschnitt (23) und zum Grundrahmen (8) ablenkbar ist,
**dadurch gekennzeichnet, dass** das Verschlusselement (11) eine Kupplungsmembran (20) umfasst, die lösbar an dem Erstkontaktabschnitt (21) der Manschette (9) fixiert ist; wobei der Erstkontaktabschnitt (21) zwischen dem Grundrahmen (8) und dem Gießauslass (12) angeordnet ist; wobei sich der Dichtungsring (24) vom Erstkontaktabschnitt (21) zum Einlass (13) erstreckt.

2. Öffnungsvorrichtung nach Anspruch 1, wobei der Dichtungsring (24) einen Hauptkörper (27) umfasst, der eine Innenfläche (33), eine von der Innenfläche (33) radial versetzte und entgegengesetzte Außenfläche (32) und eine gekrümmte Spitzenfläche (35), welche die Innenfläche (33) und die Außenfläche (32) miteinander verbindet, umfasst.

3. Öffnungsvorrichtung nach Anspruch 2, wobei die Innenfläche (33) und ein erster Flächenabschnitt (25) des Hauptabschnitts (23) den Erstkontaktabschnitt (21) dazwischen aufnehmen;
wobei die Innenfläche (33) in Bezug zum Erstkontaktabschnitt (25) geneigt ist.

4. Öffnungsvorrichtung nach einem der vorstehenden Ansprüche, wobei ein Querschnittsprofil des Dichtungsrings (24) in Bezug zu einer eine Mittelachse (E) der Manschette (9) enthaltenden Querschnittsebene (H) eine erste lineare Linie (36) und eine zweite lineare Linie (37), die von der ersten linearen Linie (36) radial versetzt und in Bezug zur ersten linearen Linie (36) radial außerhalb angeordnet ist, umfasst.

5. Öffnungsvorrichtung nach Anspruch 4, wobei das Querschnittsprofil eine gekrümmte Linie (38) umfasst, welche die erste lineare Linie (36) und die zweite lineare Linie (37) miteinander verbindet.

6. Öffnungsvorrichtung nach Anspruch 4 oder 5, wobei die zweite lineare Linie (37) eine Ausdehnung aufweist, die mindestens 50 % der Ausdehnung der ersten linearen Linie (36) entspricht.

7. Öffnungsvorrichtung nach einem der vorstehenden Ansprüche, wobei der Dichtungsring (24) einen ringförmigen Kupplungsabschnitt (28) umfasst, der mit dem Erstkontaktabschnitt (21) verbunden ist und/oder diesen teilweise begrenzt;
wobei der ringförmige Kupplungsabschnitt (28) und die Kupplungsmembran (20) einen Winkel von zwischen 85° und 95°, vorzugsweise im Wesentlichen 90°, definieren.

8. Öffnungsvorrichtung nach einem der vorstehenden Ansprüche, wobei der Dichtungsring (24) einen ringförmigen Kupplungsabschnitt (29) umfasst, welcher den Dichtungsring (24) mit dem Grundrahmen (8) verbindet; wobei der ringförmige Kupplungsabschnitt (29) eine ringförmige, plane Fläche (41) umfasst.

9. Öffnungsvorrichtung nach einem der vorstehenden Ansprüche, wobei der Grundrahmen (8) einen ersten Flansch (42) umfasst, der dazu ausgestaltet ist, innerhalb eines Innenraums der Verpackung (1) angeordnet zu sein und eine Einlassöffnung (44) des Grundrahmens (8) für das gießfähige Produkt zu begrenzen;
wobei der Dichtungsring (24) einen Einlass (13) begrenzt, wodurch das gießfähige Produkt in den Strömungskanal (10) strömen kann;
wobei der Einlass (13) von der Einlassöffnung (44) axial versetzt ist.

10. Öffnungsvorrichtung nach Anspruch 9, wobei der Einlass zwischen dem Verschlusselement (11) und/oder dem Erstkontaktabschnitt (21) und der Einlassöffnung (44) angeordnet ist.

11. Öffnungsvorrichtung nach einem der vorstehenden Ansprüche, wobei der Dichtungsring (24) dazu ausgestaltet ist, zu einem und/oder in einen Innenraum der Verpackung (1) vorzustehen.

12. Form, die dazu ausgelegt ist, das Formen der Öffnungsvorrichtung (3) nach einem der vorstehenden Ansprüche auf einen Hauptkörper (2) einer Verpackung (1) für ein gießfähiges Produkt und/oder eine Vorstufe einer Verpackung (1) für ein gießfähiges Produkt zuzulassen.

13. Verpackung (1), die mit einem gießfähigen Produkt gefüllt und/oder füllbar ist und mindestens eine Öffnungsvorrichtung (3) nach einem der Ansprüche 1 bis 11 umfasst.

14. Verpackung nach Anspruch 13, wobei die Verpackung (1) einen Hauptkörper (2) umfasst, der eine festgelegte Gießöffnung aufweist und aus einem mehrlagigen Verbundverpackungsmaterial ausgebildet ist; wobei die Öffnungsvorrichtung (3) mit dem Hauptkörper (2) und um die festgelegte Gießöffnung gekoppelt ist.

15. Verpackung nach Anspruch 13 oder 14, wobei die Öffnungsvorrichtung (3) auf einen Hauptkörper (2) der Verpackung (1) und/oder auf eine Vorstufe der Verpackung (1) geformt ist.

## Revendications

1. Dispositif d'ouverture (3) pour un conditionnement (1) ayant une ouverture de versement désignée et rempli avec un produit versable ;
le dispositif d'ouverture (3) comprend :
- un cadre de base (8) configuré pour coupler le dispositif d'ouverture (3) autour de l'ouverture de versement désignée ;
- un collier (9) s'étendant depuis le cadre de base (8) et délimitant un canal d'écoulement (10) pour le produit versable ; et
- un élément de fermeture (11) agencé et/ou agençable à l'intérieur du canal d'écoulement (10) et configuré pour couvrir et/ou fermer l'ouverture de versement désignée ;
dans lequel le collier (9) comprend une entrée (13) configurée pour permettre une entrée du produit versable dans le canal d'écoulement (10) et une sortie de versement (12) configuré pour permettre un versement, vers l'extérieur, du produit versable, à partir du canal d'écoulement (10) ;
dans lequel le collier (9) comprend en outre :
- une partie principale (23) comprenant la sortie de versement (12) et s'étendant depuis une partie de contact initial (21) du collier (9) jusqu'à la sortie de versement (12) ; et
- une bague d'étanchéité (24) comprenant l'entrée (13) ;
dans lequel la bague d'étanchéité (24) peut être déviée par rapport à la partie principale (23) et au cadre de base (8),
**caractérisé en ce que** l'élément de fermeture (11) comprend une membrane de couplage (20) fixée de façon amovible à la partie de contact initial (21) du collier (9) ;
dans lequel la partie de contact initial (21) est interposée entre le cadre de base (8) et la sortie de versement (12) ;
dans lequel la bague d'étanchéité (24) s'étend depuis la partie de contact initial (21) jusqu'à l'entrée (13).

2. Dispositif d'ouverture selon la revendication 1, dans lequel la bague d'étanchéité (24) comprend un corps principal (27) ayant une surface intérieure (33), une surface extérieure (32) radialement déplacée relativement et opposée à la surface intérieure (33) et une surface d'embout incurvée (35) reliant la surface intérieure (33) et la surface extérieure (32) l'une à l'autre.

3. Dispositif d'ouverture selon la revendication 2, dans lequel la surface intérieure (33) et une première partie de surface (25) de la partie principale (23) interposent la partie de contact initial (21) entre l'une et l'autre ;
dans lequel la surface intérieure (33) est inclinée par rapport à la première partie de surface (25).

4. Dispositif d'ouverture selon l'une quelconque des revendications précédentes, dans lequel un profil de section transversale de la bague d'étanchéité (24) par rapport à un plan de section transversale (H) contenant un axe central (E) du collier (9) comprend une première ligne linéaire (36) et une seconde ligne linéaire (37) radialement déplacée relativement à la première ligne linéaire (36) et agencée radialement à l'extérieur par rapport à la première ligne linéaire (36).

5. Dispositif d'ouverture selon la revendication 4, dans lequel le profil de section transversale comprend une ligne incurvée (38) reliant la première ligne linéaire (36) et la seconde ligne linéaire (37) l'une à l'autre.

6. Dispositif d'ouverture selon la revendication 4 ou 5, dans lequel la seconde ligne linéaire (37) a une extension correspondant à au moins 50 % de l'extension de la première ligne linéaire (36)

7. Dispositif d'ouverture selon l'une quelconque des revendications précédentes, dans lequel la bague d'étanchéité (24) comprend une partie de couplage annulaire (28) reliée à, et/ou délimitant partiellement, la partie de contact initial (21) ;
dans lequel la partie de couplage annulaire (28) et la membrane de couplage (20) définissent un angle variant entre 85 ° et 95 °, en particulier sensiblement de 90 °.

8. Dispositif d'ouverture selon l'une quelconque des revendications précédentes, dans lequel la bague d'étanchéité (24) comprend une section de couplage annulaire (29) reliant la bague d'étanchéité (24) au cadre de base (8) ;
dans lequel la section de couplage annulaire (29) comprend une surface plate annulaire (41).

9. Dispositif d'ouverture selon l'une quelconque des revendications précédentes, dans lequel le cadre de base (8) comprend une première bride (42) conçue pour être agencée à l'intérieur d'un espace intérieur du conditionnement (1) et délimitant un trou d'entrée (44) du cadre de base (8) pour le produit versable ;
dans lequel la bague d'étanchéité (24) délimite une entrée (13) permettant au produit versable de s'écouler dans le canal d'écoulement (10) ;
dans lequel l'entrée (13) est axialement déplacée relativement au trou d'entrée (44).

10. Dispositif d'ouverture selon la revendication 9, dans lequel l'entrée est interposée entre l'élément de fermeture (11) et/ou la partie de contact initial (21) et le trou d'entrée (44).

11. Dispositif d'ouverture selon l'une quelconque des revendications précédentes, dans lequel la bague d'étanchéité (24) est conçue pour faire saillie vers et/ou dans un espace intérieur du conditionnement (1).

12. Moule configuré pour permettre le moulage du dispositif d'ouverture (3) selon l'une quelconque des revendications précédentes sur un corps principal (2) d'un conditionnement (1) pour un produit versable et/ou sur un précurseur d'un conditionnement (1) pour un produit versable.

13. Conditionnement (1) rempli et/ou remplissable avec un produit versable et comprenant au moins un dispositif d'ouverture (3) selon l'une quelconque des revendications 1 à 11.

14. Conditionnement selon la revendication 13, dans lequel le conditionnement (1) comprend un corps principal (2) ayant une ouverture de versement désignée et formé à partir d'un matériau d'emballage composite multicouche ; dans lequel le dispositif d'ouverture (3) est couplé sur le corps principal (2) et autour de l'ouverture de versement désignée.

15. Conditionnement selon la revendication 13 ou 14, dans lequel le dispositif d'ouverture (3) est moulé sur un corps principal (2) du conditionnement (1) et/ou sur un précurseur du conditionnement (1).
